# EUROPÄISCHE PATENTANMELDUNG

(11) **EP 2 522 879 A2**
(43) Veröffentlichungstag der Anmeldung: **14.11.2012**
(21) Anmeldenummer: 11009885.2
(22) Anmeldetag: 15.12.2011
(51) Int. Cl.: F16F 15/02, B62D 33/06

(54) **Anordnung bestehend aus einem Lager und einem Zuganker**

(30) Priorität: 12.05.2011 DE 102011101455
(71) Anmelder: Carl Freudenberg KG, 69469 Weinheim (DE)
(72) Erfinder: Selent, Fabian, 16761 Hennigsdorf (DE); Joske, Tino, 16761 Hennigsdorf (DE)

(57) **Zusammenfassung**

Eine Anordnung, umfassend ein Auflager (1), eine zu lagernde Masse (2) und ein Lager (3), welches mit der zu lagernden Masse (2) verbunden ist und sich am Auflager (1) abstützt, wobei die zu lagernde Masse (2) relativ zum Auflager (1) bewegbar ist und wobei ein Verbindungselement (4) vorgesehen ist, welches das Auflager (1) an die zu lagernde Masse (2) anbindet, ist im Hinblick auf die Aufgabe, eine Anordnung anzugeben, bei der ein Lager problemlos und dauerhaft stabil mit einem Auflager verbunden ist, dadurch gekennzeichnet, dass das Verbindungselement (4) aus einem scheibenförmigen Abschnitt (5) und einem bolzenförmigen Abschnitt (6) besteht, welche einstückig miteinander ausgebildet sind.

## Beschreibung

### Technisches Gebiet

Die Erfindung betrifft eine Anordnung gemäß dem Oberbegriff des Patentanspruchs 1.

### Stand der Technik

Aus der Patentschrift DE 602 10 974 T2 "Aufhängungsvorrichtung für ein Führerhaus" ist eine Kombination aus einem Lager und einem Zuganker bekannt. Diese Kombination wird zur Lagerung eines Führerhauses gegenüber einem Fahrzeugrahmen verwendet.

Dabei ist das Führerhaus durch ein längliches Verbindungselement, nämlich den Zuganker, mit einem Lager verschraubt, welches am Fahrzeugrahmen festgelegt ist. Das Lager ist derart mit dem Führerhaus verschraubt, dass Teile des Führerhauses zwischen zwei Muttern fest verspannt sind. Die Muttern sind auf das längliche Verbindungselement aufgeschraubt,

Des Weiteren dient ein scheibenförmiges oder plattenförmiges vibrationsdämpfendes Element der Aufnahme von Belastungen in Unfallsituationen. Das vibrationsdämpfende Element ist ebenfalls mit der länglichen Verbindungseinrichtung verbunden und schwingt mit dieser. Da Unfallsituationen nur einmal oder nur wenige Male auftreten, erfährt das vibrationsdämpfende Element nur selten außerordentliche Belastungen.

Bei der bekannten Konstruktion ist nachteilig, dass am Lager, am vibrationsdämpfenden Element und/ oder am länglichen Verbindungselement während einer Montage torsionale Verdrehungen auftreten können.

Insbesondere ist nachteilig, dass ein Lager eine dauerhafte torsionale Verdrehung erfahren kann. Dies ist von besonders großem Nachteil, sofern das Lager als viskoelastisch dämpfendes Elastomerlager ausgeführt ist, und die torsionale Verdrehung in einen lasttragenden Elastomerabschnitt eingebracht wird.

Aus der torsionalen Verdrehung können in Abhängigkeit vom Torsionswinkel eine Reduzierung der Lebensdauer und/ oder eine nachteilige Veränderung der Gebrauchseigenschaften des Lagers resultieren.

### Darstellung der Erfindung

Der Erfindung liegt daher die Aufgabe zugrunde, eine Anordnung anzugeben, bei der ein Lager problemlos und dauerhaft stabil mit einem Auflager verbunden ist.

Die vorliegende Erfindung löst die zuvor genannte Aufgabe durch die Merkmale des Patentanspruchs 1.

Eine erfindungsgemäße Anordnung umfasst ein Auflager, eine zu lagernde Masse und ein Lager, welches mit der zu lagernden Masse verbunden ist und sich am Auflager abstützt, wobei die zu lagernde Masse relativ zum Auflager bewegbar ist und wobei ein Verbindungselement vorgesehen ist, welches das Auflager an die zu lagernde Masse anbindet.

Erfindungsgemäß ist vorgesehen, dass das Verbindungselement aus einem scheibenförmigen Abschnitt und einem bolzenförmigen Abschnitt besteht, welche einstückig miteinander ausgebildet sind.

Erfindungsgemäß ist zunächst erkannt worden, dass ein Lager mit einem Verbindungselement ausgestattet werden muss, welches auf das Lager abgestimmt ist und als Zuganker fungieren kann. Darauf ist erkannt worden, dass ein Zuganker, welcher aus einem scheibenförmigen Abschnitt und einem einstückig damit verbundenen bolzenförmigen Abschnitt besteht aufgrund seiner Einstückigkeit besonders stabil ist. Weiter ist erkannt worden, dass ein bolzenförmiger Abschnitt problemlos in einem Auflager aufgenommen werden kann, wobei der scheibenförmige Abschnitt am Lager stabil anliegen kann. Das Auflager kann an eine geeignete Anlagefläche des bofzenförmigen Abschnitts kraftschlüssig angeordnet werden. Insoweit ist eine Anordnung angegeben, bei der ein Lager problemlos und dauerhaft stabil mit einem Auflager verbunden werden kann.

Folglich ist die eingangs genannte Aufgabe gelöst.

Innerhalb des Verbindungselements könnte eine Durchgangsbohrung vorgesehen sein, in welcher eine Schraube aufgenommen ist, deren Schraubenkopf an einer Stirnfläche des Verbindungselements anliegt. Das Verbindungselement ist dabei als Zuganker ausgebildet. Eine Durchgangsbohrung dient der Befestigung des Zugankers direkt am Lager mittels einer Schraube. Die Schraube kann in den Zuganker hinein und durch diesen hindurch in das Lager geschraubt werden, wobei der Schraubenkopf am Zuganker an einer geeigneten Stirnfläche anliegt.

Vor diesem Hintergrund könnte das dem Schraubenkopf abgewandte Gewindeende der Schraube in das Lager eingeschraubt sein. So ist eine problemlose Befestigung des Verbindungselements bzw. Zugankers mit dem Lager ermöglicht. Das Gewindeende könnte in ein Hydrolager oder in ein Elastomerlager eingeschraubt sein.

Im Lager und im Verbindungselement könnten Scherstifte aufgenommen sein, die sich vom Lager in das Verbindungselement erstrecken. Durch die Scherstifte ist eine Verdrehsicherung zwischen dem Verbindungselement bzw. dem Zuganker und dem Lager gegeben. Durch diese konstruktiven Merkmale der Anordnung kann eine Verdrehung eines tragenden elastomeren Abschnitts des Lagers, insbesondere während der Montage des Lagers, vermieden werden.

Der bolzenförmige Abschnitt könnte eine kreisringförmige Anlagefläche für das Auflager aufweisen. So ist eine nahezu verkippungsfreie Anlage und Montage des Verbindungselements mit dem Auflager ermöglicht.

Der bolzenförmige Abschnitt könnte einen Gewindeabschnitt aufweisen. So kann ein Kraftschluß über eine Schraubverbindung erfolgen, welche einen Gewindeabschnitt des bolzenförmigen Abschnitts, das Auflager, die zu lagernde Masse und mindestens eine Schraubenmutter miteinander verbindet.

Am Verbindungselement könnte mindestens ein elastomeres Anschlagelement ausgebildet sein. Hierdurch kann das Verbindungselement sanft an ein Gegenlager anschlagen. Es ist insoweit ein progressives Anschlagverhalten realisierbar. Elastomere Anschlagelemente können an gegenüberliegenden Seiten des Verbindungselements angeordnet sein.

Das hier beschriebene Lager kann als Elastomerlager oder Hydrolager ausgestaltet sein, welches mit einem Zuganker nach Art des Verbindungselements versehen ist.

Mit der hier beschriebenen Anordnung aus einem Lager und einem Zuganker können Motoren, Getriebe, Kompressoren oder Generatoren gelagert werden.

Insbesondere kann die Anordnung in Anlagen zur Energieerzeugung, nämlich in Windkraftanlagen, in Anlagen zur Rohstoffgewinnung, -aufbereitung oderverarbeitung verwendet werden.

Es gibt nun verschiedene Möglichkeiten, die Lehre der vorliegenden Erfindung auf vorteilhafte Weise auszugestalten und weiterzubilden. Dazu ist einerseits auf die dem Patentanspruch 1 nachgeordneten Ansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Schnittzeichnung einer Anordnung, die ein Auflager, eine zu lagernde Masse und ein Lager umfasst, wobei das Lager mit einem Verbindungselement verbunden ist, welches mit dem Auflager verschraubt ist,
- Fig. 2: eine Schnittzeichnung eines Verbindungselements mit einem länglichen bolzenförmigen Abschnitt,
- Fig. 3: eine Schnittzeichnung eines Verbindungselements mit einem kürzeren bolzenförmigen Abschnitt, und
- Fig. 4: eine Schnittzeichnung einer weiteren Ausgestaltung eines Verbindungselements, welches keine Scherstifte aufnehmen kann.

### Ausführung der Erfindung

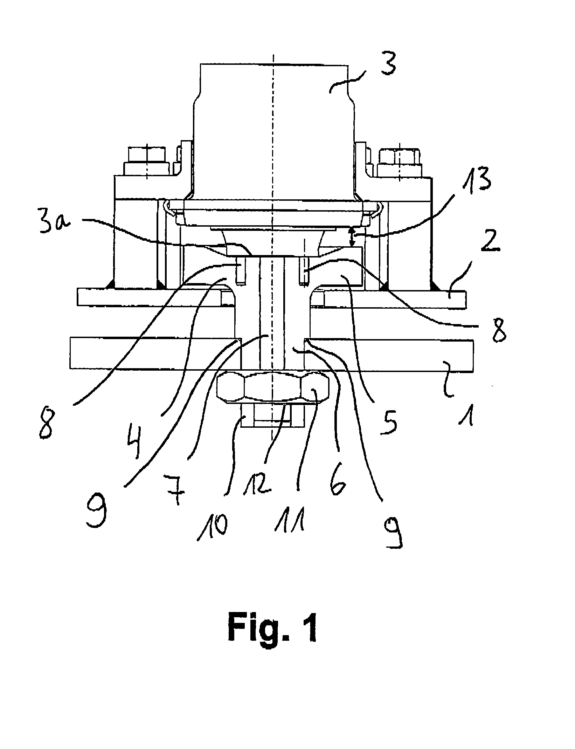

Fig. 1 zeigt eine Anordnung, umfassend ein Auflager 1, eine zu lagernde Masse 2 und ein Lager 3, welches mit der zu lagernden Masse 2 verbunden ist und sich am Auflager 1 abstützt, wobei die zu lagernde Masse 2 relativ zum Auflager 1 bewegbar ist und wobei ein Verbindungselement 4 vorgesehen ist, welches das Auflager 1 an die zu lagernde Masse 2 anbindet.

Das Verbindungselement 4 besteht aus einem scheibenförmigen Abschnitt 5 und einem bolzenförmigen Abschnitt 6, welche einstückig miteinander ausgebildet sind.

Die zu lagernde Masse 2 umfasst einen Kabinenboden einer Fahrzeugkabine, das Auflager 1 ist Teil eines Fahrzeugrahmens. Das Lager 3 ist als Hydrolager ausgestaltet. Das Verbindungselement 4 ist als Zuganker ausgestaltet.

Innerhalb des Verbindungselements 4 ist eine Durchgangsbohrung 7 vorgesehen, in welcher eine nicht gezeigte Schraube aufnehmbar ist, deren Schraubenkopf an einer Stimfläche 12 des Verbindungselements 4 anliegen kann.

Das dem Schraubenkopf abgewandte Gewindeende der Schraube kann in das Lager 3 eingeschraubt sein.

Fig. 1 zeigt, dass im Lager 3 und im Verbindungselement 4 Scherstifte 8 aufgenommen sind, die sich vom Lager 3 in das Verbindungselement 4 erstrecken.

Der bolzenförmige Abschnitt 6 weist eine kreisringförmige Anlagefläche 9 für das Auflager 1 auf. Der bolzenförmige Abschnitt 6 weist einen Gewindeabschnitt 10 auf, der mit einer Schraubenmutter 11 verschraubt ist.

Das Verbindungselement 4 ist derart ausgestaltet und/ oder angeordnet, dass zwischen dem Lager 3 und einer dem Lager 3 zugewandten kreisringförmigen Fläche des Verbindungselements 4 ein Freiweg 13 ausgebildet ist. Insoweit ist das Verbindungselement 4 derart optimiert, dass in der Anordnung Freiwege 13 auftreten können. Das Verbindungselement 4 liegt dabei am Lager 3 an einem Zentralbereich 3a des Lagers 3 an.

Das Verbindungselement 4 ist derart optimiert, dass es Reißlasten oder Kerbeinwirkungen standhält. Des Weiteren ist das Verbindungselement 4 konstruktiv optimal auf den beanspruchten Bauraum abgestimmt. Das Verbindungselement 4 kann elastomere Anschlagelemente 16'" aufweisen.

Die in Fig. 1 gezeigte Anordnung kann auch um 180° gedreht verbaut werden, wobei diese Bauweise nicht dargestellt ist. In diesem Fall würde das Verbindungselement 4 derart angeordnet sein, dass der Gewindeabschnitt 10 vertikal nach oben abragend angeordnet ist. Die zu lagernde Masse 2 und das Auflager 1 würden hierbei ihre Plätze tauschen.

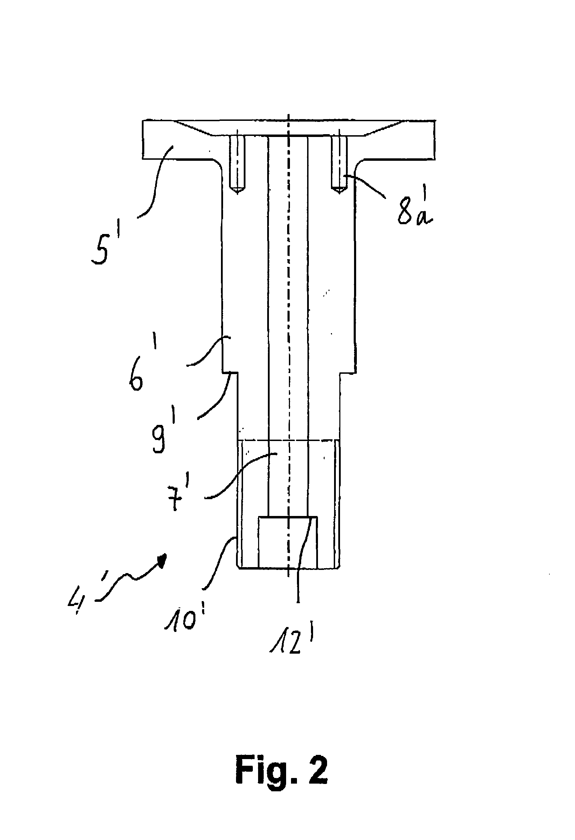

Fig. 2 zeigt ein längliches Verbindungselement 4', welches aus einem scheibenförmigen Abschnitt 5' und einem bolzenförmigen Abschnitt 6' besteht, welche einstückig miteinander ausgebildet sind. Innerhalb des Verbindungselements 4' ist eine Durchgangsbohrung 7' vorgesehen, in welcher eine Schraube aufnehmbar ist, deren Schraubenkopf an einer Stirnfläche 12' des Verbindungselements 4' anliegen kann. Im Verbindungselement 4' sind Bohrungen 8' a für Scherstifte 8 aufgenommen. Der bolzenförmige Abschnitt 6' weist eine kreisringförmige Anlagefläche 9' für das Auflager 1 auf. Der bolzenförmige Abschnitt 6' weist einen Gewindeabschnitt 10' auf.

Das längliche Verbindungselement 4' ist bauraumoptimiert ausgestaltet. Es kann große Distanzen und/ oder große Freiwege zwischen dem Auflager 1 und der zu lagernden Masse 2 überbrücken.

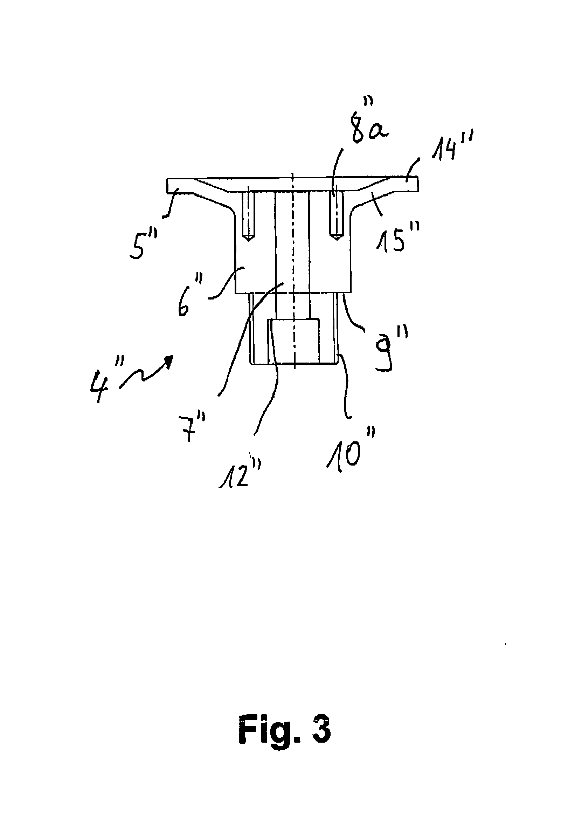

Fig. 3 zeigt ein kürzeres Verbindungselement 4", welches aus einem scheibenförmigen Abschnitt 5" und einem bolzenförmigen Abschnitt 6" besteht, welche einstückig miteinander ausgebildet sind. Innerhalb des Verbindungselements 4" ist eine Durchgangsbohrung 7" vorgesehen, in welcher eine Schraube aufnehmbar ist, deren Schraubenkopf an einer Stirnfläche 12" des Verbindungselements 4" anliegen kann. Im Verbindungselement 4" sind Bohrungen 8" a für Scherstifte 8 aufgenommen. Der bolzenförmige Abschnitt 6" weist eine kreisringförmige Anlagefläche 9" für das Auflager 1 auf. Der bolzenförmige Abschnitt 6" weist einen Gewindeabschnitt 10" auf.

Das Verbindungselement 4" kann besonders gut Kerbeinwirkungen standhalten. Es kann sehr große Verformungsenergien aufnehmen. Hierzu weist der scheibenförmige Abschnitt 5" in radialer Richtung im Wesentlichen die gleiche Dicke auf.

Ein radial äußerer, ringförmiger Randbereich 14" mündet in radialer Richtung nach innen in einen gegen die Längsachse des Verbindungselements 4" geneigten, ringförmigen Neigungsbereich 15". Der ringförmige Neigungsbereich 15" neigt sich in Richtung des Gewindeabschnitts 10" nach unten.

Das Verbindungselement 4" ist bauraumoptimiert ausgestaltet. Es kann kleinere Distanzen und/ oder kleinere Freiwege zwischen dem Auflager 1 und der zu lagernden Masse 2 überbrücken.

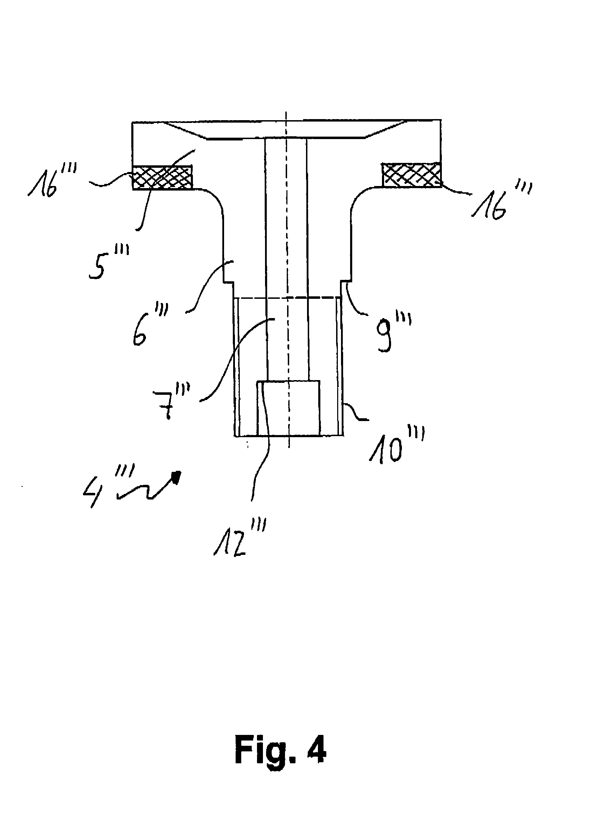

Fig. 4 zeigt ein weiteres Verbindungselement 4"', welches aus einem scheibenförmigen Abschnitt 5"' und einem bolzenförmigen Abschnitt 6'" besteht, welche einstückig miteinander ausgebildet sind. Innerhalb des Verbindungselements 4'" ist eine Durchgangsbohrung 7'" vorgesehen, in welcher eine Schraube aufnehmbar ist, deren Schraubenkopf an einer Stirnfläche 12'" des Verbindungselements 4'" anliegen kann. Im Verbindungselement 4'" sind keine Bohrungen für Scherstifte 8 aufgenommen. Der bolzenförmige Abschnitt 6'" weist eine kreisringförmige Anlagefläche 9'" für das Auflager 1 auf. Der bolzenförmige Abschnitt 6'" weist einen Gewindeabschnitt 10"' auf.

Das Verbindungselement 4'" weist an seinem scheibenförmigen Abschnitt 5'" ein elastomeres Anschlagelement 16'" auf. Hierdurch kann eine Progression im Anschlagverhalten des Verbindungselements 4"' realisiert werden.

Das elastomere Anschlagelement 16'" ist an der dem Gewindeabschnitt 10"' zugewandten Seite des scheibenförmigen Abschnitts 5'" angeordnet. Es kann jedoch auch ein elastomeres Anschlagelement allein oder zusätzlich auf der gegenüberliegenden Seite angeordnet sein.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Anordnung, umfassend ein Auflager (1), eine zu lagernde Masse (2) und ein Lager (3), welches mit der zu lagernden Masse (2) verbunden ist und sich am Auflager (1) abstützt, wobei die zu lagernde Masse (2) relativ zum Auflager (1) bewegbar ist und wobei ein Verbindungselement (4) vorgesehen ist, welches das Auflager (1) an die zu lagernde Masse (2) anbindet,
**dadurch gekennzeichnet, dass** das Verbindungselement (4) aus einem scheibenförmigen Abschnitt (5) und einem bolzenförmigen Abschnitt (6) besteht, welche einstückig miteinander ausgebildet sind.

2. Anordnung nach Anspruch 1, **dadurch gekennzeichnet, dass** innerhalb des Verbindungselements (4) eine Durchgangsbohrung (7) vorgesehen ist, in welcher eine Schraube aufgenommen ist, deren Schraubenkopf an einer Stirnfläche (12) des Verbindungselements (4) anliegt.

3. Anordnung nach Anspruch 2, **dadurch gekennzeichnet, dass** das dem Schraubenkopf abgewandte Gewindeende der Schraube in das Lager (3) eingeschraubt ist.

4. Anordnung nach einem der Ansprüche 1 bis 3, **dadurch gekennzeichnet, dass** im Lager (3) und im Verbindungselement (4) Scherstifte (8) aufgenommen sind, die sich vom Lager (3) in das Verbindungselement (4) erstrecken.

5. Anordnung nach einem der Ansprüche 1 bis 4, **dadurch gekennzeichnet, dass** der bolzenförmige Abschnitt (6) eine kreisringförmige Anlagefläche (9) für das Auflager (1) aufweist.

6. Anordnung nach einem der Ansprüche 1 bis 5, **dadurch gekennzeichnet, dass** der bolzenförmige Abschnitt (6) einen Gewindeabschnitt (10) aufweist.

7. Anordnung nach einem der Ansprüche 1 bis 6, **dadurch gekennzeichnet, dass** am Verbindungselement (4"') mindestens ein elastomeres Anschlagelement (16"') ausgebildet ist.
